(19) Europäisches Patentamt
European Patent Office
Office européen des brevets

(11) **EP 3 672 812 B1**

(12) **EUROPÄISCHE PATENTSCHRIFT**

(45) Veröffentlichungstag und Bekanntmachung des Hinweises auf die Patenterteilung:
**18.10.2023 Patentblatt 2023/42**

(21) Anmeldenummer: **18726391.8**

(22) Anmeldetag: **15.05.2018**

(51) Internationale Patentklassifikation (IPC):
**B60C 9/00** *(2006.01)* **B60C 9/04** *(2006.01)*

(52) Gemeinsame Patentklassifikation (CPC):
**B60C 9/0042; B60C 9/005; D02G 3/48;**
B60C 2009/0425; B60C 2009/0458;
B60C 2009/0466; B60C 2009/0475

(86) Internationale Anmeldenummer:
**PCT/EP2018/062480**

(87) Internationale Veröffentlichungsnummer:
**WO 2019/037903 (28.02.2019 Gazette 2019/09)**

(54) **FESTIGKEITSTRÄGERLAGE DER KARKASSE SOWIE FAHRZEUGLUFTREIFEN**

REINFORCING SUPPORT LAYER OF CARCASS AND PNEUMATIC VEHICLE TIRE

COUCHE D'ÉLÉMENTS DE RENFORT DE LA CARCASSE AINSI QUE PNEUMATIQUE DE VÉHICULE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **22.08.2017 DE 102017214595**

(43) Veröffentlichungstag der Anmeldung:
**01.07.2020 Patentblatt 2020/27**

(73) Patentinhaber: **Continental Reifen Deutschland GmbH**
**30165 Hannover (DE)**

(72) Erfinder:
• **REESE, Wolfgang**
**31228 Peine (DE)**
• **VOLK, Heiner**
**31535 Neustadt (DE)**
• **LUDWIG, Reinhard**
**31582 Nienburg (DE)**

(74) Vertreter: **Continental Corporation**
**c/o Continental AG**
**Intellectual Property**
**Postfach 169**
**30001 Hannover (DE)**

(56) Entgegenhaltungen:
EP-A1- 1 798 073    EP-A1- 2 123 481
EP-A1- 2 708 380    US-A1- 2012 205 019

EP 3 672 812 B1

**Beschreibung**

Die Erfindung betrifft eine Festigkeitsträgerlage der Karkasse eines Fahrzeugluftreifens aufweisend Festigkeitsträger, wobei die Festigkeitsträger innerhalb der Festigkeitsträgerlage im Wesentlichen parallel zueinander angeordnet und in elastomeres Material eigebettet sind, wobei zumindest ein Festigkeitsträger als Kord aus zwei Garnen, welche miteinander endverdreht sind, ausgebildet ist und wobei die zwei Garne aus Polyester sind und wobei der Kord genau zwei Garne aufweist. Weiter betrifft die Erfindung einen Fahrzeugluftreifen aufweisend eine Karkasse mit einer solchen Festigkeitsträgerlage.

Festigkeitsträger zur Verstärkung der Karkasse von Fahrzeugluftreifen sind dem Fachmann in Aufbau und Werkstoff in verschiedensten Ausführungen bekannt. Die Festigkeitsträger werden, beispielsweise durch Kalandrieren, in eine Kautschukmischung eingebettet, um als gummierte Festigkeitsträgerlage im Fahrzeugluftreifen eingesetzt werden zu können.

Ein Fahrzeugluftreifen radialer Bauart weist im Allgemeinen eine luftundurchlässige Innenschicht, eine Festigkeitsträger enthaltende Radialkarkasse, die vom Zenitbereich des Reifens über die Seitenwände bis in den Wulstbereich reicht und dort meist durch Umschlingen zugfester Wulstkerne verankert ist, einen radial außen befindlichen profilierten Laufstreifen und einen zwischen dem Laufstreifen und der Karkasse angeordneten Gürtel auf, welcher radial außen mit der Gürtelbandage abgedeckt ist.

In PKW-Radialreifen verlaufen die Festigkeitsträger der meist einlagigen Karkasse weitgehend in radialer Richtung. Die Festigkeitsträger einer Festigkeitsträgerlage der Karkasse müssen eine ausreichende Festigkeit aufweisen, um die im Betrieb des Reifens auftretenden Kräfte hinreichend aufnehmen zu können und dauerhaltbar zu sein. Insbesondere leistet die Karkasse Widerstand gegen den Innendruck des Reifens und hat die Funktion eines Festigkeitsträgers. Weiter sollen die Festigkeitsträger bei ausreichender Bruchkraft und eine hohe Bruchdehnung aufweisen, um die Dauerhaltbarkeit des Reifens zu erhöhen und eine verbesserte Haltbarkeit bezüglich Schlagbeanspruchung, wie sie beispielsweise beim Durchfahren eines Schlagloches auftreten kann, aufzuweisen.

Die "Bruchdehnung" ist ein in der Werkstoffprüfung verwendeter Begriff für die Dehnung bei Bruchkraft. Die Bruchdehnung wird meist in % angegeben. Die "Bruchkraft" ist ein in der Werkstoffprüfung verwendeter Begriff für die Kraft, die benötigt wird, um einen Prüfkörper zu brechen oder zu zerreißen. Die Bruchdehnung und die Bruchkraft können gemessen sein nach ASTM D885M.

Ein "Garn" ist im Rahmen der vorliegenden Erfindung in Anlehnung an die DIN 60900 ein linienförmiges Gebilde, das aus einzelnen Filamenten oder Fasern besteht, welche miteinander verdreht sind. Im Rahmen der vorliegenden Erfindung stellt ein "Kord" linienförmige Gebilde dar, das aus zwei oder mehr miteinander endverdrehten Garnen bestehen. Ein Garn aus einem Material ist ganz oder teilweise aus diesem Material gebildet.

Bekannt sind beispielsweise Festigkeitsträger der Karkasslage von Reifen aus einem Polyester wie High-Modulus-Low-Shrinkage Polyethylenterephthalat (HMLS-PET) oder Polyethylennaphthalat (PEN). An Karkasslagen mit Festigkeitsträgern HMLS-PET oder aus PEN ist aber nachteilig, dass die Festigkeitsträger üblicherweise eine geringe Bruchdehnung und eine geringe Bruchenergie aufweisen. Bei Schlagbeanspruchung wie etwa beim Durchfahren eines Schlagloches kann ein solcher Festigkeitsträger über die Dehngrenze hinaus beansprucht werden, wodurch die Haltbarkeit eines Reifens aufweisend einen solchen Karkass-Festigkeitsträger verringert ist.

Bekannt ist auch die Verwendung von Korden aufweisend ein Garn aus HMLS-PET mit einer hohen Verdrehungszahl. Konkret offenbart die EP 2 976 449 B1 eine Karkasslage aufweisend einen Hybridkord der Konstruktion Rayon 620x1 + HMLS-PET 550x1, 500 T/m S + 500 T/m S, 500 T/m Z. Auch Rayon weist allerdings eine geringe Bruchdehnung und eine geringe Bruchenergie auf. Auch ein Reifen aufweisend einen solchen Kord als Karkass-Festigkeitsträger weist Nachteile in der Haltbarkeit bei Schlagbeanspruchung auf. Die EP 2 708 380 A1 offenbart eine Karkasslage aufweisend einen Verstärkungskord aus zwei Garnen aus PET jeweils der Feinheit 5000 dtex, die mit 100 t/m bis 600 t/m miteinander endverdreht sind.

Die US 2012/205019 A1 offenbart HMLS-PET als geeignetes Material für Karkass-Verstärkungskorde. Über eine Maßangabe zur Endverdrehung von Garnen zum Kord schweigt sich Offenbarung aus.

Die EP 2 123 481 A1 offenbart einen Reifen aufweisend eine Karkasse mit einem Verstärkungskord aus zwei Garnen aus Polyester jeweils der Feinheit 2300 dtex, die mit 8,8 turns per inch miteinander endverdreht sind.

Die EP 1 798 073 A1 offenbart einen Karkasskord aus zwei Garnen aus PEN jeweils der Feinheit 1100 dtex, die mit 44 t/m miteinander endverdreht sind.

Der vorliegenden Erfindung liegt die Aufgabe zu Grunde, eine Karkass-Festigkeitsträgerlage eines Fahrzeugluftreifens bereitzustellen, welche eine erhöhte Haltbarkeit gegenüber Schlagbeanspruchung aufweist.

Die Aufgabe wird gelöst, indem die zwei Garne mit einem Twist-Faktor von von 270 bis 350, besonders bevorzugt mit 280 bis 320, miteinander zum Kord endverdreht sind.

Der "Twist-Faktor" ist ein Maß für die Verdrehung unter Berücksichtigung der Feinheit.

Der Twist-Faktor ist definiert als Verdrehungszahl [T/m]* (Fadenfeinheit [dtex]/ 10000 )$^{1/2}$ Die Verdrehungszahl ist in Umdrehungen pro Meter (Turns per meter) angegeben. Bei dem Twist-Faktor eines Kordes ist die Fadenfeinheit die Feinheit des Kordes, d.h. die

Summe der Feinheiten der Garne des Kordes. Bei dem Twist-Faktor eines Garns ist die Fadenfeinheit die Feinheit des jeweiligen Garns.

Es hat sich gezeigt, dass ein Kord mit einem solch großen Twist-Faktor eine stark erhöhte Bruchdehnung aufweist. Wesentlich ist hierbei, dass die Verdrehungszahl an die Feinheit des Kordes angepasst ist. Die Garne werden durch die Vertwistung mit einem solch hohen Twist-Faktor von 270 bis 350, besonders bevorzugt mit 280 bis 320, auf eine helikale Bahn mit kleinem Gangwinkel gebracht. Somit ist bei Dehnung eine starke geometrische Dehnung der Garne im Kord ermöglicht. Durch den hohen Twist-Faktor gelangen die Garne somit erst bei einer größeren Dehnung in die Eigendehnung als bei Korden mit einem geringeren Twist-Faktor, insbesondere als bei Korden gleicher Feinheit aber einem geringeren Twist-Faktor. Hierdurch ist die Bruchdehnung stark erhöht. Eine Festigkeitsträgerlage aufweisend solche Korde als Festigkeitsträger weist somit eine erhöhte Haltbarkeit bei Schlagbeanspruchung auf. Eine solche Festigkeitsträgerlage eignet sich hervorragend als Karkasslage eines Fahrzeugluftreifens.

Ein noch höherer Twist-Faktor als 400 des Kordes hingegen kann zu einer Überdrehung des Kordes führen, wodurch bei steigenden Herstellungskosten die Ermüdungsbeständigkeit negativ beeinflusst sein kann. Zudem können mit einem zu hohen Twist-Faktor der Elastizitätsmodul sowie die Festigkeit sinken. Bei einem Twist-Faktor kleiner als 250 ist hingegen die vorteilhafte Auswirkung der Vertwistung auf die Bruchdehnung gering.

In einer bevorzugten Ausführungsform ist zumindest ein Garn der zwei Garne ein Garn aus High-Modulus-Low-Shrinkage Polyethylenterephthalat (HMLS-PET). Festigkeitsträger aus HMLS-PET weist einen geringen Schrumpf auf, wodurch ein Reifen aufweisend eine Karkasslage mit einem solchen Festigkeitsträger eine vorteilhaft geringe Seitenwandeinschnürung aufweist. Versuche haben gezeigt, dass Korde aus HMLS-PET mit einem Twist-Faktor von 270 bis 350, besonders bevorzugt mit 280 bis 320, eine vorteilhaft große Bruchdehnung aufweisen.

In einer anderen bevorzugten Ausführungsform ist zumindest ein Garn der zwei Garne ein Garn aus Polyethylennaphthalat (PEN). Auch PEN weist einen geringen Schrumpf auf. Weiter weist PEN einen vorteilhaften Elastizitätsmodul auf. Durch das heraufsetzen der Bruchdehnung durch den hohen Twist-Faktor von 270 bis 350, besonders bevorzugt mit 280 bis 320, eignet sich ein solcher Festigkeitsträger hervorragend für eine Festigkeitsträgerlage, insbesondere für eine Festigkeitsträgerlage der Karkasse eines Fahrzeugluftreifens.

Gemäß der Erfindung der Kord aus genau zwei Garnen gebildet. Ein solcher Kord ist auch einfach und kostengünstig herzustellen.

Vorteilhaft ist es, wenn alle Garne der zwei Garne aus demselben Material sind. Korde aus Garnen aus HMLS-PET oder Korde aus Garne aus PEN sind üblich und erprobt als Bestandteil von Karkass-Festigkeitsträgerkorden. Durch den hohen Twist-Faktor ist die Bruchdehnung dieser Korde wesentlich verbessert. Gleichzeitig ist eine einfache Konstruktion ermöglicht.

Als besonders zweckmäßig hat es sich dabei herausgestellt wenn der Kord genau zwei Garne aufweist und wenn diese beiden Garne aus HMLS-PET oder wenn diese beiden Gare aus PEN sind. Ein solcher Kord eignet sich hervorragend als Karkass-Festigkeitsträger.

Vorteilhaft ist es auch, wenn alle Garne der zwei Garne in ihrer Feinheit und/oder in ihrer Verdrehungszahl gleich ausgebildet sind. Ein solcher symmetrischer Kord ist auf einfache Art und Weise hinsichtlich innerer Spannungen optimierbar.

Vorteilhaft ist es auch, wenn die Verdrehungszahl jedes Garns der zwei Garne der Verdrehungszahl des Kords entspricht. Ein solch symmetrischer Kord kann mittels eines kostensparenden 1-Stufen-Prozesses gefertigt werden.

Eine besonders vorteilhafte Konstruktion des Kordes ergibt sich, wenn die zwei Garne alle in eine erste Richtung erstverdreht sind und die zwei Garne in eine zur ersten Richtung verschiedenen zweiten Richtung miteinander zum Kord endverdreht sind. Beispielsweise können alle Garne in S-Richtung und der Kord in Z-Richtung oder alle Garne in Z-Richtung und der Kord in S-Richtung verdreht sein.

Vorteilhaft ist es auch, wenn die zwei Garne jeweils eine Feinheit von 500 dtex bis 5000 dtex, bevorzugt von 550 dtex bis 4000 dtex, besonders bevorzugt von 1000 dtex bis 3500 dtex, aufweisen.

Als besonders vorteilhafte Ausführungsform, insbesondere für eine Karkasse eines Fahrzeugluftreifens, hat es sich herausgestellt, wenn der Kord aus genau zwei HMLS-PET - Garnen gebildet ist und dass die zwei Garne jeweils eine Feinheit von 1440 dtex, 1670 dtex, 2200 dtex, 2880 dtex oder von 3340 dtex aufweisen. Solche Korde weisen für eine Festigkeitsträgerlage der Karkasse eines Fahrzeugluftreifens hervorragende Kraft-Dehnungs-Eigenschaften auf.

Vorteilhaft sind aber auch dünnere Korde mit genau zwei HMLS-PET -Garnen der Feinheit 550 dtex, 720 dtex oder 1100 dtex. Solch dünne Karkass-Korde ermöglichen einen Reifen mit geringem Rollwiderstand.

Vorteilhaft für die Festigkeitsträgerlage einer Karkasse eines Fahrzeugluftreifens ist es, wenn der Kord eine Bruchdehnung von mindestens 20,0 %, bevorzugt von mindestens 21,0 %, aufweist, gemessen gemäß ASTM D885M.

Die Erfindung umfasst weiter einen Fahrzeugluftreifen aufweisend eine erfindungsgemäße Festigkeitsträgerlage der Karkasse. Die Karkasse kann ein oder mehrere Festigkeitsträgerlagen aufweisen. Ein solcher Fahrzeugluftreifen weist eine verbesserte Haltbarkeit insbesondere gegenüber Schlagbeanspruchung auf. Besonders vorteilhaft ist es, wenn alle Karkasslagen erfindungsgemäß ausgeführt sind.

Es kann sich um einen Reifen für einen Personenkraftwagen, einen Van, ein SUV, einen Light-Truck, ein Nutzfahrzeug, ein Kraftrad oder einen Bus handeln.

Die Tabelle 1 zeigt Werte für die Bruchdehnung von Korden aus jeweils zwei Garnen gleicher Feinheit und gleicher Verdrehungsrichtung aus HLMS-PET. Die Verdrehungsrichtung des Kordes ist hierzu entgegengesetzt. Die Garne weisen die gleiche Verdrehungszahl auf wie der Kord.

Die Beispielkorde 1, 2 und 3 weisen dabei einen herkömmlichen Twist-Faktor von kleiner als 205 auf. Mit jedem der Beispielkorde wird ein Kord gleicher Feinheit aber mit einem Twist-Faktor zwischen 290 und 300 verglichen. Es zeigt sich jeweils eine signifikante Erhöhung der Bruchdehnung um mindestens 4 % auf über 21,0 %.

Die Korde 1, 2 und 3 zeigen im Vergleich zum jeweiligen Beispielkord eine etwas verringerte aber für den Einsatz als Festigkeitsträger einer Karkasslage eines Fahrzeugluftreifens ausreichende Bruchkraft.

Tabelle 1

|  | Beispielkord 1 HMLS-PET 1440×2 | Kord 1 HMLS-PET 1440×2 | Beispielkord 2 HMLS-PET 2200×2 | Kord 2 HMLS-PET 2200×2 | Beispielkord 3 HMLS-PET 3340×2 | Kord 3 HMLS-PET 3340×2 |
|---|---|---|---|---|---|---|
| Twist-Faktor | 199 | 295 | 199 | 295 | 204 | 294 |
| Bruchdehnung | 16,2 % | 21,4 % | 16,8 % | 22,1 % | 19,0% | 25,3 % |
| Bruchkraft | 193 N | 171 N | 297 N | 258 N | 410 N | 397 N |

Weitere Merkmale, Vorteile und Einzelheiten der Erfindung werden nun anhand der schematischen Zeichnungen, die Ausführungsbeispiele darstellen, näher erläutert. Dabei zeigt die

Fig. 1 einen radialen Querschnitt durch einen erfindungsgemäßen Fahrzeugluftreifen;
Fig. 2 einen Abschnitt eines Kords als Festigkeitsträger einer Festigkeitsträgerlage gemäß der Erfindung.

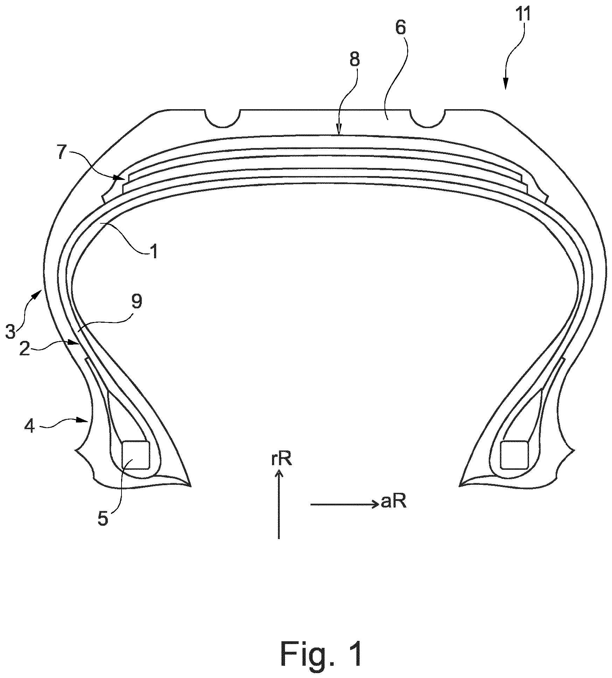

Die Figur 1 zeigt einen radialen Querschnitt durch einen Fahrzeugluftreifen 11 für einen Personenkraftwagen. Die wesentlichen Bauteile, aus welchen sich der dargestellte Fahrzeugluftreifen 11 zusammensetzt, sind eine weitgehend luftundurchlässige Innenschicht 1, eine hier eine Festigkeitsträgerlage 9 aufweisende Karkasse 2, die in herkömmlicher Weise vom Zenitbereich des Fahrzeugluftreifens über die Seitenwände 3 bis in die Wulstbereiche 4 reicht und dort durch Umschlingen zugfester Wulstkerne 5 verankert ist, einen radial außerhalb der Karkasse 2 befindlichen profilierten Laufstreifen 6 und einen zwischen dem Laufstreifen 6 und der Karkasse 2 angeordneten, zwei Festigkeitsträgerlagen beinhaltenden Gürtel 7, welcher radial außen mit der Gürtelbandage 8 abgedeckt ist umfasst.

Bei Fahrzeugluftreifen 11 in radialer Bauart sind die Festigkeitsträger der Karkasslage 9 der Karkasse 2 in etwa parallel zueinander in etwa in radialer Richtung rR angeordnet. Bei einem Fahrzeugluftreifen 11 anderer Bauart können die Festigkeitsträger der Karkasslage 9 können aber auch in einem Winkel größer als 0° zur radialen Richtung rR angeordnet sein. Die erfindungsgemäße Festigkeitsträgerlage 9 eignet sich für beide Bauarten von Fahrzeugluftreifen 11.

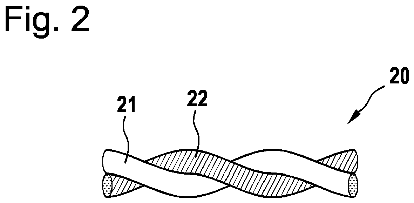

Figur 2 zeigt einen Abschnitt eines Kords 20 für eine Festigkeitsträgerlage 9 der Karkasse 2. Der Kord 20 besteht aus genau zwei Garnen 21, 22 aus Polyester, die mit einem Twist-Faktor von 270 bis 350, besonders bevorzugt mit 280 bis 320, miteinander zum Kord 20 endverdreht sind. Die beiden Garne 21, 22 sind in ihrer Feinheit und in ihrer Verdrehungszahl gleich ausgebildet. Die Verdrehungszahl der Garne 21, 22 entspricht der Verdrehungszahl des Kords 20. Die Garne 21, 22 sind beide in eine erste Richtung erstverdreht und in eine zur ersten Richtung verschiedenen zweiten Richtung miteinander zum Kord endverdreht. Die Garne 21, 22 weisen jeweils eine Feinheit 500 dtex bis 5000 dtex, bevorzugt von 550 dtex bis 4000 dtex, besonders bevorzugt von 1000 dtex bis 3500 dtex, auf. Der Kord 20 kann eine Bruchdehnung von >20% aufweisen. Die Garne 21, 22 können beide aus PEN sein. Die beiden Garne 21, 22 können aber auch beide aus HMLS-PET sein. Sind die beiden Garne 21, 22 aus HMLS-PET, so kann es sich um einen Kord der Konstruktion 1440x2, 1670x2, 2200x2, 2880x2 oder 3340x2 handeln. Es kann sich insbesondere um den Kord 1, den Kord 2 oder den Kord 3 handeln.

Es kann sich um einen Kord 20 für eine Karkasslage eines PKW Reifens handeln. Insbesondere handelt es sich dabei um einen PKW Reifen 11 wie in Fig. 1 gezeigt.

**Bezugszeichenliste**

(Teil der Beschreibung)

| | |
|---|---|
| 1 | Innenschicht |
| 2 | Karkasse |
| 3 | Seitenwand |
| 4 | Wulstbereich |
| 5 | Wulstkern |
| 6 | Laufstreifen |
| 7 | Gürtel |
| 8 | Gürtelbandage |
| 9 | Festigkeitsträgerlage |
| 20 | Kord |
| 21 | Garn |
| 22 | Garn |

rR      radiale Richtung
aR      axiale Richtung

**Patentansprüche**

1.  Festigkeitsträgerlage (9) der Karkasse (2) eines Fahrzeugluftreifens (11) aufweisend Festigkeitsträger, wobei die Festigkeitsträger innerhalb der Festigkeitsträgerlage (9) im Wesentlichen parallel zueinander angeordnet und in elastomeres Material eigebettet sind, wobei zumindest ein Festigkeitsträger als Kord (20) aus zwei Garnen (21, 22), welche miteinander endverdreht sind, ausgebildet ist und wobei die zwei Garne (21, 22) aus Polyester sind und wobei der Kord (20) genau zwei Garne (21, 22) aufweist,
    **dadurch gekennzeichnet, dass**

    die zwei Garne (21, 22) mit einem Twist-Faktor von 270 bis 350, besonders bevorzugt mit 280 bis 320, miteinander zum Kord (20) endverdreht sind, wobei der Twist-Faktor definiert ist als

    $$\text{Verdrehungszahl [T/m]}^{\,*}\,(\text{ Fadenfeinheit [dtex]/ } 10000\,)^{1/2},$$

    wobei die Verdrehungszahl in Umdrehungen pro Meter (Turns per meter) angegeben ist und wobei die Fadenfeinheit die Feinheit des Kordes, d.h. die Summe der Feinheiten der Garne des Kordes, ist.

2.  Festigkeitsträgerlage (9) nach Anspruch 1, **dadurch gekennzeichnet, dass** zumindest ein Garn (21, 22) der zwei Garne (21, 22) ein Garn (21, 22) aus High-Modulus-Low-Shrinkage Polyethylenterephthalat (HMLS-PET) ist.

3.  Festigkeitsträgerlage (9) nach zumindest einem der voranstehenden Ansprüche, **dadurch gekennzeichnet, dass** zumindest ein Garn (21, 22) der zwei Garne (21, 22) ein Garn aus Polyethylennaphthalat (PEN) ist.

4.  Festigkeitsträgerlage (9) nach zumindest einem der voranstehenden Ansprüche, **dadurch gekennzeichnet, dass** alle Garne (21, 22) der zwei Garne (21, 22) aus demselben Material sind.

5.  Festigkeitsträgerlage (9) nach zumindest einem der voranstehenden Ansprüche, **dadurch gekennzeichnet, dass** alle Garne (21, 22) der zwei Garne (21, 22) in ihrer Feinheit und/oder in ihrer Verdrehungszahl gleich ausgebildet sind.

6.  Festigkeitsträgerlage (9) nach zumindest einem der voranstehenden Ansprüche, **dadurch gekennzeichnet, dass** die Verdrehungszahl jedes Garns (21, 22) der zwei Garne (21, 22) der Verdrehungszahl des Kords (20) entspricht.

7.  Festigkeitsträgerlage (9) nach zumindest einem der voranstehenden Ansprüche, **dadurch gekennzeichnet, dass** die zwei Garne (21, 22) alle in eine erste Richtung erstverdreht sind und die zwei Garne (21, 22) in eine zur ersten Richtung verschiedenen zweiten Richtung miteinander zum Kord (20) endverdreht sind.

8. Festigkeitsträgerlage (9) nach zumindest einem der voranstehenden Ansprüche, **dadurch gekennzeichnet, dass** die zwei Garne (21, 22) jeweils eine Feinheit von 500 dtex bis 5000 dtex, bevorzugt von 550 dtex bis 4000 dtex, besonders bevorzugt von 1000 dtex bis 3500 dtex, aufweisen.

9. Festigkeitsträgerlage (9) nach zumindest einem der voranstehenden Ansprüche, **dadurch gekennzeichnet, dass** der Kord (20) aus genau zwei Garnen (21, 22) aus HMLS-PET gebildet ist und dass die zwei Garne (21, 22) jeweils eine Feinheit von 1440 dtex, 1670 dtex, 2200 dtex, 2880 dtex oder von 3340 dtex aufweisen.

10. Festigkeitsträgerlage (9) nach zumindest einem der voranstehenden Ansprüche, **dadurch gekennzeichnet, dass** der Kord (20) aus genau zwei Garnen (21, 22) aus HMLS-PET gebildet ist und dass die zwei Garne (21, 22) jeweils eine Feinheit von 550 dtex, 720 dtex oder von 1100 dtex aufweisen.

11. Festigkeitsträgerlage (9) nach zumindest einem der voranstehenden Ansprüche, **dadurch gekennzeichnet, dass** der Kord (20) eine Bruchdehnung von mindestens 20,0 %, bevorzugt von mindestens 21,0 %, aufweist, gemessen gemäß ASTM D885M.

12. Fahrzeugluftreifen (11) aufweisend eine Karkasse (2) mit zumindest einer Festigkeitsträgerlage (9) gemäß zumindest einem der voranstehenden Ansprüche.

**Claims**

1. Strength member ply (9) of the carcass (2) of a pneumatic vehicle tyre (11) comprising strength members, wherein within the strength member ply (9) the strength members are arranged substantially parallel to one another and are embedded in elastomeric material, wherein at least one strength member is in the form of a cord (20) composed of two yarns (21, 22) which are end-twisted with one another and wherein the two yarns (21, 22) are composed of polyester and wherein the cord (20) comprises precisely two yarns (21, 22),
**characterized in that**
the two yarns (21, 22) are end-twisted with a twist factor of 270 to 350, particularly preferably 280 to 320, to afford the cord (20), wherein the twist factor is defined as
twist level [T/m] * (thread fineness [dtex]/10 000)$^{1/2}$, wherein the twist level is reported in turns per metre and wherein the thread fineness is the fineness of the cord, i.e. the sum of the finenesses of the yarns of the cord.

2. Strength member ply (9) according to Claim 1, **characterized in that** at least one yarn (21, 22) of the two yarns (21, 22) is a yarn (21, 22) composed of high-modulus low-shrinkage polyethylene terephthalate (HMLS-PET).

3. Strength member ply (9) according to at least one of the preceding claims, **characterized in that** at least one yarn (21, 22) of the two yarns (21, 22) is a yarn composed of polyethylene naphthalate (PEN).

4. Strength member ply (9) according to at least one of the preceding claims, **characterized in that** all yarns (21, 22) of the two yarns (21, 22) are composed of the same material.

5. Strength member ply (9) according to at least one of the preceding claims, **characterized in that** all yarns (21, 22) of the two yarns (21, 22) are identical in their fineness and/or in their twist level.

6. Strength member ply (9) according to at least one of the preceding claims, **characterized in that** the twist level of each yarn (21, 22) of the two yarns (21, 22) corresponds to the twist level of the cord (20).

7. Strength member ply (9) according to at least one of the preceding claims, **characterized in that** the two yarns (21, 22) are all initial-twisted in a first direction and the two yarns (21, 22) are end-twisted with one another in a second direction distinct from the first direction to afford the cord (20).

8. Strength member ply (9) according to at least one of the preceding claims, **characterized in that** the two yarns (21, 22) each have a fineness of 500 dtex to 5000 dtex, preferably of 550 dtex to 4000 dtex, particularly preferably of 1000 dtex to 3500 dtex.

9. Strength member ply (9) according to at least one of the preceding claims, **characterized in that** the cord (20) is formed from precisely two yarns (21, 22) of HMLS PET and **in that** the two yarns (21, 22) each have a fineness of 1440 dtex, 1670 dtex, 2200 dtex, 2880 dtex or of 3340 dtex.

10. Strength member ply (9) according to at least one of the preceding claims, **characterized in that** the cord (20) is formed from precisely two yarns (21, 22) of HMLS-PET and **in that** the two yarns (21, 22) each have a fineness of 550 dtex, 720 dtex or of 1100 dtex.

11. Strength member ply (9) according to at least one of the preceding claims, **characterized in that** the cord (20) has a breaking elongation of at least 20.0%, preferably of at least 21.0%, measured according to ASTM D885M.

12. Pneumatic vehicle tyre (11) comprising a carcass (2) having at least one strength member ply (9) according to at least one of the preceding claims.

**Revendications**

1. Nappe de renforcement (9) de la carcasse (2) d'un pneumatique de véhicule (11) comportant des éléments de renforcement, les éléments de renforcement étant à l'intérieur de la nappe de renforcement (9) disposés pour l'essentiel parallèlement les uns aux autres et étant incorporés dans un matériau polymère, au moins un élément de renforcement étant conçu comme un câblé (20) de deux fils (21, 22), qui sont torsadés en bout l'un avec l'autre, et les deux fils (21, 22) étant en polyester, et le câblé (20) comportant exactement deux fils (21, 22), **caractérisée en ce que**

   les deux fils (21, 22) sont torsadés en bout l'un avec l'autre pour donner le câblé (20), avec un coefficient de torsion de 270 à 350, en particulier de 280 à 320, le coefficient de torsion étant défini par

$$\text{Torsion [tr/m]} * (\text{finesse des fils [dtex]}/\ 10\ 000)^{1/2},$$

   la torsion étant indiquée en tours par minute (turns per meter), et la finesse des fils étant la finesse du câblé, c'est-à-dire la somme des finesses des fils du câblé.

2. Nappe de renforcement (9) selon la revendication 1, **caractérisée en ce qu'**au moins un fil (21, 22) des deux fils (21, 22) est un fil (21, 22) en poly(téréphtalate d'éthylène) à module d'élasticité élevé et à faible retrait (HMLS-PET).

3. Nappe de renforcement (9) selon au moins l'une des revendications précédentes, **caractérisée en ce qu'**au moins un fil (21, 22) des deux fils (21, 22) est un fil en poly(naphtalate d'éthylène) (PEN).

4. Nappe de renforcement (9) selon au moins l'une des revendications précédentes, **caractérisée en ce que** tous les fils (21, 22) des deux fils (21, 22) sont en le même matériau.

5. Nappe de renforcement (9) selon au moins l'une des revendications précédentes, **caractérisée en ce que** tous les fils (21, 22) des deux fils (21, 22) sont conçus de façon à avoir une finesse et/ou une torsion identiques.

6. Nappe de renforcement (9) selon au moins l'une des revendications précédentes, **caractérisée en ce que** la torsion de chaque fil (21, 22) des deux fils (21, 22) correspond à la torsion du câblé (20).

7. Nappe de renforcement (9) selon au moins l'une des revendications précédentes, **caractérisée en ce que** les deux fils (21, 22) ont tous subi une torsion initiale dans une première direction, et les deux fils (21, 22) subissent une torsion en bout avec le câblé (20) dans une deuxième direction différente de la première direction.

8. Nappe de renforcement (9) selon au moins l'une des revendications précédentes, **caractérisée en ce que** les deux fils (21, 22) ont chacun une finesse de 500 dtex à 5 000 dtex, de préférence de 550 dtex à 4 000 dtex, d'une manière particulièrement préférée de 1 000 dtex à 3 500 dtex.

9. Nappe de renforcement (9) selon au moins l'une des revendications précédentes, **caractérisée en ce que** le câblé (20) est formé exactement de deux fils (21, 22) en HMLS-PET, et **en ce que** les deux fils (21, 22) présentent chacun une finesse de 1 440 dtex, de 1 670 dtex, de 2 200 dtex, de 2 880 dtex ou de 3 340 dtex.

10. Nappe de renforcement (9) selon au moins l'une des revendications précédentes, **caractérisée en ce que** le câblé (20) est formé d'exactement deux fils (21, 22) en HMLS-PET et **en ce que** les deux fils (21, 22) présentent chacun une finesse de 550 dtex, de 720 dtex ou de 1 100 dtex.

11. Nappe de renforcement (9) selon au moins l'une des revendications précédentes, **caractérisée en ce que** le câblé (20) présente un allongement à la rupture d'au moins 20,0 %, de préférence d'au moins 21,0 %, mesuré selon ASTM D885M.

12. Pneumatique de véhicule (11) comportant une carcasse (2) ayant au moins une nappe de renforcement (9) selon au moins l'une des revendications précédentes.

Fig. 1

# Fig. 2

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2976449 B1
- EP 2708380 A1
- US 2012205019 A1
- EP 2123481 A1
- EP 1798073 A1